# FASCICULE DE BREVET EUROPEEN

(11) **EP 3 747 640 B1**
(45) Date de publication et mention de la délivrance du brevet: **07.09.2022**
(21) Numéro de dépôt: 20178411.3
(22) Date de dépôt: 05.06.2020
(51) Int. Cl.: B29C 70/46, B29L 31/30, B60R 13/08

(54) **PROCÉDÉ DE FABRICATION D'UNE PIÈCE DE VÉHICULE AUTOMOBILE ET PIÈCE DE VÉHICULE ASSOCIÉE**
VERFAHREN ZUR HERSTELLUNG EINES KRAFTFAHRZEUGTEILS UND ENTSPRECHENDES FAHRZEUGTEIL
METHOD FOR MANUFACTURING A PART FOR A MOTOR VEHICLE AND ASSOCIATED VEHICLE PART

(30) Priorité: 06.06.2019 FR 1906037
(43) Date de publication de la demande: 09.12.2020
(73) Titulaire: Adler Pelzer France Grand-Est, 08210 Mouzon (FR)
(72) Inventeur: FAYARD, Maxime, 08000 CHARLEVILLE-MEZIERES (FR); JEUNESSE, Steve, 08210 MOUZON (FR); NICAISE, Florine, 08000 CHARLEVILLE-MEZIERES (FR)
(74) Mandataire: Lavoix

(56) Documents cités:
- DE-A1-102013 104 715
- FR-A1- 3 054 166
- US-A1- 2014 030 491

## Description

La présente invention concerne un procédé de fabrication d'une pièce de véhicule automobile selon le préambule de la revendication 1.

Une telle pièce est, par exemple, un élément d'un ensemble de carénage sous caisse.

La pièce présente un rôle d'insonorisation acoustique et de résistance mécanique. Elle est destinée à résoudre des problèmes acoustiques liées aux bruits crées par le véhicule automobile, tels que le moteur ou le frottement des roues. En outre, la pièce doit présenter une bonne résistance mécanique au choc, notamment en cas de percussion du bas de caisse du véhicule avec un trottoir.

Il est connu de réaliser de telles pièces en matériaux injectés pour qu'elles présentent une bonne tenue mécanique. On ajoute ensuite sur ces pièces un coussin acoustique par exemple en Thinsulate^{™} pour leur conférer des propriétés d'absorption acoustique. De tels coussins permettent de réduire le volume sonore principalement en direction de l'habitacle. Cependant, le Thinsulate^{™} est très onéreux. En outre, l'absorption par le coussin ne réduit pas suffisamment la pollution sonore vers l'extérieur du véhicule.

Il est également connu de réaliser des pièces à base de fibres présentant de bonnes propriétés acoustiques. Cependant, les matériaux fibreux sont peu résistants aux déchirements. L'ajout d'un film sur la surface du matériau fibreux améliore sa résistance mais diminue fortement ses capacités d'absorption acoustiques.

DE 10 2013 104715 A1 décrit un procédé de fabrication d'une pièce d'insonorisation acoustique selon le préambule de la revendication 1.

Un but de l'invention est donc d'obtenir de manière simple et peu onéreuse, une pièce très performante pour l'absorption acoustique et présentant de meilleures propriétés de résistance mécanique.

A cet effet, l'invention a pour objet un procédé conforme à la revendication 1.

Le procédé selon l'invention peut comprendre l'une ou plusieurs des caractéristiques des revendications 2 à 10.

L'invention a également pour objet une pièce de véhicule conforme à la revendication 11.

La pièce de véhicule selon l'invention peut comprendre l'une ou plusieurs des caractéristiques des revendications 12 et 13.

L'invention sera mieux comprise à la lecture de la description qui va suivre, donnée uniquement à titre d'exemple, et faite en se référant aux dessins annexés, sur lesquels :
[Fig 1] la figure 1 est une vue prise en coupe partielle d'une pièce formée à l'issu du procédé selon l'invention,
[Fig 2] la figure 2 est une vue analogue à la figure 1 d'une nappe destinée à former la pièce de la figure 1 selon l'invention,
[Fig 3] la figure 3 est une vue analogue à la figure 1, lors d'une étape de fabrication de la pièce selon l'invention, et
[Fig 4] la figure 4 est une vue analogue à la figure 2, d'une deuxième nappe destinée à former une pièce selon l'invention,

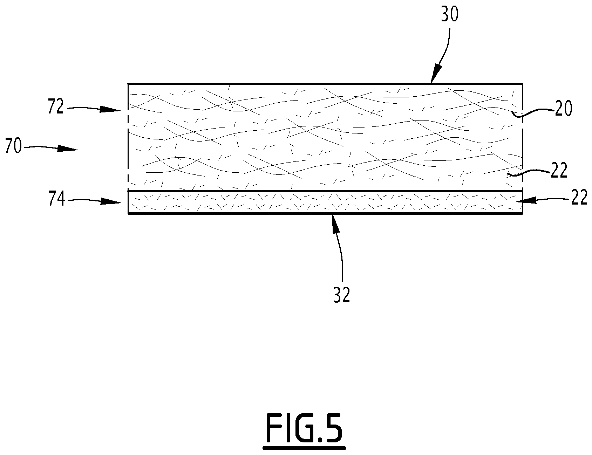

[Fig 5] la figure 5 est une vue analogue à la figure 2, d'une troisième nappe destinée à former une pièce selon l'invention.

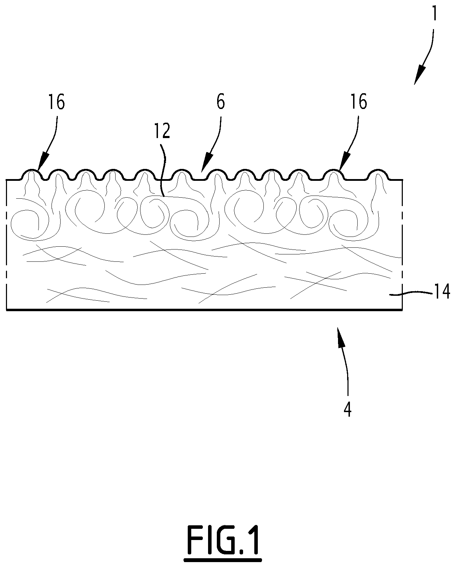

Une pièce 1 de véhicule automobile est représentée sur la figure 1. Une telle pièce 1 est, par exemple, un élément d'un ensemble de carénage sous caisse.

La pièce 1 est destinée à être appliquée directement sur une surface du véhicule automobile. Par exemple, la pièce 1 est fixée sur la surface au moyen de pions.

La pièce 1 comporte une face extérieure 4 destinée à être tournée vers le sol et une face intérieure 6 destinée à être tournée vers la caisse du véhicule.

Comme représenté sur la figure 1, la pièce 1 est formée en un seul bloc venu de matière.

La pièce 1 est asymétrique, la face extérieure 4 et la face intérieure 6 ne présentant pas le même aspect.

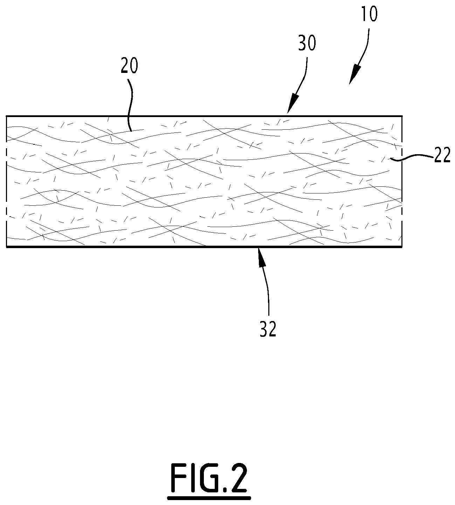

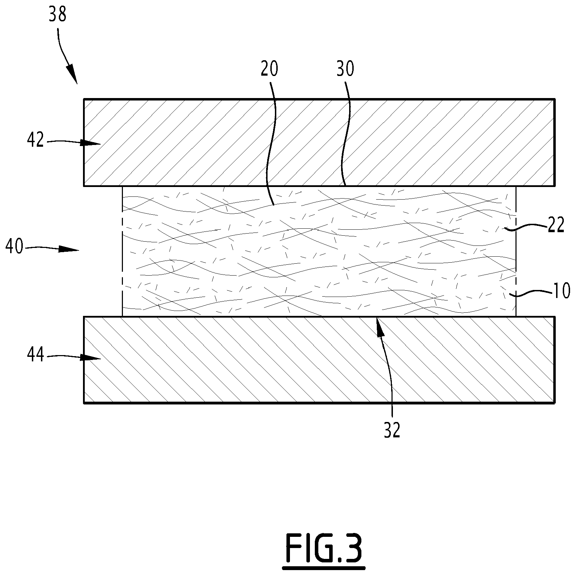

La pièce 1 est fabriquée à partir d'une nappe 10 de fibres 12, une partie des fibres 12 ayant au moins partiellement fondues de sorte à former une matrice 14. Le procédé de fabrication et la nappe 10 seront décrits ultérieurement en regard des figures 2 et 3.

La pièce présente une proportion plus importante de fibres 12 non fondues au niveau de la face intérieure 6 qu'au niveau de la face extérieure 4.

La face extérieure 4 présente un aspect plus lisse que la face intérieure 6.

La pièce 1 présente une absorption acoustique à la fréquence de 1500 Hz avec une lame d'air de 60 mm comprise entre 0,7 alpha Sabine et 0,98 alpha Sabine.

La pièce 1, au voisinage de la face extérieure 4, présente une porosité adaptée pour présenter une résistivité au passage de l'air qui est avantageusement comprise entre 120000 N.m⁻⁴.s et 150000 N.m⁻⁴.s, notamment égale à environ 135000 N.m-⁴.s.

Par « au voisinage de la face extérieure 4 », on entend sur une tranche de faible épaisseur, par exemple comprise entre 1,5 mm et 2 mm s'étendant à partir de la face extérieure 4.

La résistance au passage de l'air ou sa résistivité est mesurée par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

La pièce 1, au voisinage de la face intérieure 6, présente une porosité adaptée pour présenter une résistivité au passage de l'air qui est avantageusement comprise entre 20000 N.m⁻⁴.s et 60000 N.m⁻⁴.s, notamment égale à environ 40000 N.m⁻⁴.s.

Par « au voisinage de la face intérieure 6», on entend sur une tranche de faible épaisseur, par exemple comprise entre 1,8 mm et 2,2 mm s'étendant à partir de la face intérieure 6.

La face intérieure 6 de la pièce 1 est plus poreuse que la face extérieure 4 de la pièce 1. Néanmoins, la face extérieure 4 est suffisamment poreuse pour permettre une absorption acoustique.

La masse surfacique de la pièce 1 est, par exemple, comprise entre 700 g/m² et 2000 g/m² et notamment entre 700 g/m² et 900 g/m².

L'épaisseur de la pièce 1, mesurée entre la face extérieure 4 et la face intérieure 6, est avantageusement comprise entre 2 mm et 4 mm, par exemple entre 2,5 mm et 3,5 mm.

La nappe 10 de fibres 12 est représentée sur la figure 2.

La nappe 10 est formée d'un mélange de fibres de liaison 22 et de fibres de structure 20.

Les fibres de liaison 22 et les fibres de structure 20 sont assemblées dans la nappe 10, par exemple, mécaniquement par aiguilletage sans l'utilisation de liants de nature chimique.

Les fibres de liaison 22 sont en premier polymère thermofusible. Le premier polymère thermofusible présente une première température de fusion Tf1.

Les fibres de liaison 22 sont destinées à être au moins partiellement fondues dans la pièce 1.

Les fibres de liaison 22 présentent un point de fusion inférieur à celui des fibres de structure 20.

Avantageusement, les fibres de liaison 22 présente un titre compris entre 3,3 dTex et 6,7 dTex.

En outre, les fibres de liaison 22 présentent une longueur comprise entre 60 mm et 120 mm, par exemple entre 50 mm et 70 mm.

Par exemple, le premier polymère thermofusible est un copolymère de polyéthylène (coPET) et présente une première température de fusion de 110 °C

En variante, le premier polymère est un polytéréphtalate d'éthylène (PET) et présente une première température de fusion de 250°C.

En variante, le premier polymère est un polyester bicomposant de coPET et de PET et présente une première température de fusion de 110 °C.

Les fibres de structure 20 sont en deuxième polymère thermofusible. Le deuxième polymère thermofusible présente une deuxième température de fusion Tf2.

La première température de fusion Tf1 est inférieure à la deuxième température de fusion Tf2.

Les fibres de structure 20 sont destinées à ne pas être totalement fondues dans la pièce 1. Ainsi, elles conservent au moins partiellement leur intégrité au sein de la pièce 1.

Avantageusement les fibres de structure 20 présentent un titre compris entre 3,3 dTex et 17 dTex.

En outre, les fibres de structure 20 présentent une longueur comprise entre 60 mm et 120 mm, par exemple entre 50 mm et 70 mm.

Par exemple, le deuxième polymère est un polytéréphtalate d'éthylène (PET) et présente une deuxième température de fusion de 250°C

La nappe 10 présente une première face 30 et une deuxième face 32.

La première face 30 est destinée à former la face intérieure 6 de la pièce 1.

La deuxième face 32 est destinée à former la face extérieure 4 de la pièce 1.

Dans le premier mode de réalisation, la répartition des fibres de liaison 22 et des fibres de structure 20 dans la nappe 10 est homogène entre la première face 30 de la nappe et la deuxième face 32 de la nappe 10.

Avantageusement, la nappe 10 comprend un pourcentage élevé de fibres de structure 20. Par exemple la nappe comprend entre 60 % et 80 % en masse de fibres de structure 20 et entre 20% et 40% en masse de fibres de liaison (22). Par exemple, la nappe comprend 70% en masse de fibres de structure 20 et 30% en masse de fibres de liaison 22.

Le procédé de fabrication de la pièce est mis en oeuvre dans une installation 38 représentée schématiquement sur la figure 3. Cette installation comporte un dispositif de chauffage 40, une presse froide (non représentée) et un moule de conformage (non représenté).

Le dispositif de chauffage 40 fonctionne par chauffe contact.

Le dispositif de chauffage 40 est, de préférence, disposé à l'écart du moule de thermoformage.

Le dispositif de chauffage 40 comporte une partie supérieure 42 et une partie inférieure 44 mobiles l'une par rapport à l'autre entre une position de pression et une position écartée.

En outre, le dispositif de chauffage 40 comporte un dispositif de contrôle (non représenté). Le dispositif de contrôle est propre à contrôler indépendamment la température de la partie supérieure 42 et la température de la partie inférieure 44.

Avantageusement, la partie supérieure 42 et la partie inférieure 40 sont des plaques planes.

Le moule de conformage présente une configuration ouverte d'insertion de la nappe et une configuration fermée. Le moule de conformage définit dans la configuration fermée une cavité de moulage de forme sensiblement complémentaire à la forme de la pièce 1.

Un procédé de fabrication de la pièce 1 va maintenant être décrit.

Initialement, une nappe 10 est fournie.

L'installation 38 est fournie. Le dispositif de chauffage 40 est en position écarté.

En outre, le dispositif de chauffage 40 est avantageusement préchauffé. La partie supérieure 42 du dispositif de chauffage 40 est maintenue à une première température de chauffage T1. La partie inférieure 44 du dispositif de chauffage 40 est maintenue à une deuxième température de chauffage T2, la deuxième température de chauffage T2.

La deuxième température de chauffage T2 est strictement supérieure à la première température de chauffage T1.

Avantageusement, la première température de chauffage T1 est strictement inférieure à la deuxième température de fusion Tf2.

Selon la revendication 1, la première température de chauffage T1 est supérieure ou égale à la première température de fusion Tf1. La deuxième température de chauffage T2 est supérieure ou égale à la deuxième température de fusion Tf2.

Avantageusement, le moule de conformage est refroidi. La température du moule de conformage est par exemple maintenue à une température de 15°C.

La nappe 10 est placée dans le dispositif de chauffage 40, comme illustré sur la figure 3. Le dispositif de chauffage est placé en position de pression.

En position de pression, la nappe 10 est en contact avec la partie inférieure 44 du dispositif de chauffage 40 et avec la partie supérieure 42 du dispositif de chauffage 40.

La première face 30 de la nappe 10 est en contact avec la partie supérieure 42 du dispositif de chauffage 40 et la deuxième face 32 de la nappe 10 est en contact avec la partie inférieure 44 du dispositif de chauffage 40.

En outre, en position de pression, la pression exercée par le dispositif de chauffage 40 est faible de sorte que la nappe 10 reste poreuse et présente la résistance au passage de l'air souhaitée.

Au cours de l'étape de chauffage, la partie supérieure 42 du dispositif de chauffage 40 est maintenue à la première température de chauffage T1 et la partie inférieure 44 du dispositif de chauffage 40 est maintenue à la deuxième température de chauffage T2.

Les calories transmises par contact de la première face 30 avec la partie supérieure 42 du moule causent la fusion d'une partie des fibres de liaison à proximité de la partie supérieure du moule. Cependant, à proximité de la partie supérieur 42 du moule, les fibres de structures 20 ne fondent pas.

Les calories transmises par contact de la deuxième face 32 avec la partie inférieure 44 du moule causent la fusion des fibres de liaison 22 et d'une partie des fibres de structure 20 à proximité de la partie inférieure 44.

La durée de l'étape de chauffage est adaptée pour qu'au cœur de la nappe, la température soit inférieure ou égale à la première température de chauffage.

La durée de l'étape de chauffage dépend du grammage de la nappe, de l'épaisseur de la nappe et de la différence entre la première température de chauffage et la deuxième température de chauffage.

Par exemple, pour une épaisseur de nappe 10 de 10 mm, la durée de l'étape de chauffage est strictement inférieure à 70 secondes.

A l'issue de l'étape de chauffage, la nappe 10 est partiellement fondue et conserve une certaine cohésion en raison des fibres non fondues, la nappe 10 est ainsi facile à manipuler et à mettre en forme.

La nappe 10 ainsi est ensuite déplacée dans le moule de conformage. La nappe est conformée dans le moule de conformage, de sorte à former la pièce.

La nappe 10 est ensuite refroidie. Le refroidissement dans le moule de conformage engendre la solidification des fibres fondues formant une matrice 14. Les fibres de structure 20 non fondues et les fibres de liaison 22 non fondues forment des fibres 12 noyées dans la matrice 14.

La face extérieure 4 de la pièce 1 présente ainsi un aspect relativement lisse. En outre, la nappe 10 n'ayant pas subie de compression trop importante au cours du chauffage, elle conserve une résistance au passage de l'air adaptée.

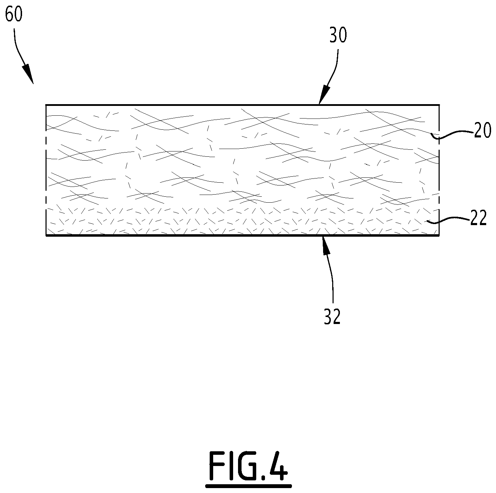

La figure 4 représente une nappe 60 pour un deuxième mode de réalisation de l'invention.

Dans ce deuxième mode de réalisation, la répartition des fibres de liaison et des fibres de structure dans la nappe 60 n'est pas homogène.

Avant le chauffage, la nappe 60 présente un gradient de fibres de liaison 22 entre la première face 30 et la deuxième face 32 de la nappe.

La proportion de fibres de liaison 22 est plus élevée au voisinage de la deuxième face 32 qu'au voisinage de la première face 30.

Le gradient est par exemple formé par projection de poudre constituée de premier polymère sur la deuxième face 32 de la nappe 60.

Dans le troisième mode de réalisation, la nappe 70 diffère de la nappe 60 du deuxième mode de réalisation en ce que la nappe 70 comprend deux couches 72, 74.

La première couche 72 est constituée d'un mélange de fibres de structure 20 et de fibres de liaison 22.

La deuxième couche 74 est constituée de fibres de liaison 22.

L'épaisseur de la deuxième couche 74 est faible par rapport à l'épaisseur de la première couche 72.

Par exemple, le grammage de la deuxième couche 74 est égale à 80g/m².

Par exemple, l'épaisseur de la deuxième couche est comprise entre 0,2 mm et 0,3 mm.

La deuxième face 32 est formée par la deuxième couche 74.

Au cours du chauffage, les deux couches 72, 74 fusionnent de sorte que la pièce 1 est formée d'un seul bloc.

La pièce 1 ainsi formée est apte à présenter un rôle d'insonorisation acoustique et de résistance mécanique. En effet, la pièce 1 fibreuse absorbent les bruits crées par le véhicule automobile, tels que le moteur ou le frottement des roues. En outre, la face extérieure 4 présente une bonne résistance mécanique au choc, notamment en cas de percussion du bas de caisse du véhicule avec un trottoir.

En effet, la face extérieure 4 étant plus lisse, il y a moins de risque de déchirement de la pièce par accrochage avec un obstacle. Ainsi, la pièce résiste notamment à un essai simulant l'écrasement de la pièce contre un trottoir.

## Revendications

1. Procédé de fabrication d'une pièce (1) de véhicule automobile, le procédé comprenant les étapes suivantes :
- fourniture d'une nappe (10, 60, 70), la nappe (10, 60, 70) comprenant un mélange de fibres de liaison (22) et de fibres de structure (20),
- fourniture d'un dispositif de chauffage (40), le dispositif de chauffage (40) comprenant une partie supérieure (42) et une partie inférieure (44), mobiles l'une par rapport à l'autre entre une position de pression et une position écartée,
- chauffage de la nappe (10, 60, 70), dans le dispositif de chauffage (40), par contact de la nappe (10, 60, 70) avec la partie inférieure (44) du dispositif de chauffage (40) et avec la partie supérieure (42) du dispositif de chauffage (44),
- conformage de la nappe (10, 60, 70) dans un moule de conformage, de sorte à former la pièce (1),
les fibres de liaison (22) étant en premier polymère thermofusible, les fibres de structure (20) étant en deuxième polymère thermofusible, le premier polymère thermofusible présentant une première température de fusion, le deuxième polymère thermofusible présentant une deuxième température de fusion, la première température de fusion étant inférieure à la deuxième température de fusion, et en ce que, durant l'étape de chauffage, la partie supérieure (42) du dispositif de chauffage (40) est maintenue à une première température de chauffage et la partie inférieure (44) du dispositif de chauffage (40) est maintenue à une deuxième température de chauffage, la deuxième température de chauffage étant strictement supérieure à la première température de chauffage,
**caractérisé en ce que** la première température de chauffage est supérieure ou égale à la première température de fusion et la deuxième température de chauffage est supérieure ou égale à la deuxième température de fusion.

2. Procédé de fabrication selon la revendication 1, dans lequel la première température de chauffage est strictement inférieure à la deuxième température de fusion.

3. Procédé de fabrication selon la revendication 1 ou 2, dans lequel le deuxième polymère thermofusible comprend du polytéréphtalate d'éthylène (PET).

4. Procédé de fabrication selon l'une quelconque des revendications 1 à 3, dans lequel le premier polymère thermofusible comprend un copolymère de polyéthylène (coPET).

5. Procédé de fabrication selon l'une quelconque des revendications 1 à 4, dans lequel les fibres de liaisons (22) sont des fibres bicomposantes de copolymère de polyéthylène (coPET) et de polytéréphtalate d'éthylène (PET).

6. Procédé de fabrication selon l'une quelconque des revendications 1 à 5, dans lequel la nappe (10, 60, 70) comprend entre 60 % et 80 % en masse de fibres de structure (20) et entre 20% et 40% en masse de fibres de liaison (22).

7. Procédé de fabrication selon l'une quelconque des revendications 1 à 6, dans lequel, la nappe (60, 70) présente une première face (30) et une deuxième face (32), et, avant le chauffage, la nappe (60, 70) présente un gradient de fibres de liaison (22) entre la première face (30) et la deuxième face (32) de la nappe (60, 70), la proportion de fibres de liaison (22) étant plus élevée au voisinage de la deuxième face (32) qu'au voisinage de la première face (30), et en ce que, durant le chauffage, la première face (30) est en contact avec la partie supérieure (42) du dispositif de chauffage (40) et la deuxième face (32) est en contact avec la partie inférieure (44) du dispositif de chauffage (40).

8. Procédé de fabrication selon la revendication 7 dans lequel, le gradient est formé par projection de poudre constituée de premier polymère sur la deuxième face (32) de la nappe (60).

9. Procédé de fabrication selon l'une quelconque des revendications 1 à 8, dans lequel la nappe (70) comprend une première couche (72) constituée d'un mélange de fibres de structure (20) et de fibres de liaison (22) et une deuxième couche (74) constituée de fibres de liaison (22).

10. Procédé de fabrication selon l'une quelconque des revendications 1 à 9 dans lequel la deuxième température de chauffage est supérieure à 240°C et la première température de chauffage est comprise entre 180°C et 220°C.

11. Pièce (1) de véhicule susceptible d'être obtenue par le procédé de fabrication selon l'une quelconque des revendications 1 à 10.

12. Pièce (1) selon la revendication 11, **caractérisée en ce que** la pièce (1) présente une absorption acoustique comprise entre 0,7 alpha Sabine et 0,98 alpha Sabine.

13. Pièce (1) selon la revendication 11 ou 12, dans laquelle la pièce (1) comprend une face extérieure (4) et une face intérieure (6), la résistance au passage à l'air de la pièce (1) au voisinage de la face extérieure (4) étant strictement supérieure à la résistance au passage à l'air de la pièce au voisinage de la face intérieure (6).

## Patentansprüche

1. Herstellungsverfahren eines Teils (1) eines Kraftfahrzeugs, das Verfahren umfassend die folgenden Schritte:
- Bereitstellen einer Matte (10, 60, 70), die Matte (10, 60, 70) umfassend eine Mischung aus Verbindungsfasern (22) und Strukturfasern (20),
- Bereitstellen einer Heizvorrichtung (40), die Heizvorrichtung (40) umfassend einen oberen Abschnitt (42) und einen unteren Abschnitt (44), die untereinander zwischen einer Druckposition und einer beabstandeten Position beweglich sind,
- Erwärmen der Matte (10, 60, 70), in der Heizvorrichtung (40), durch Berühren der Matte (10, 60, 70) mit dem unteren Abschnitt (44) der Heizvorrichtung (40) und mit dem oberen Abschnitt (42) der Heizvorrichtung (44),
- Formen der Matte (10, 60, 70) in einer Form zum Formen, um das Teil (1) zu formen,
wobei die Verbindungsfasern (22) aus einem ersten heißschmelzenden Polymer sind, die Strukturfasern (20) aus einem zweiten heißschmelzenden Polymer sind, das erste heißschmelzende Polymer eine erste Schmelztemperatur aufweist, das zweite heißschmelzende Polymer eine zweite Schmelztemperatur aufweist, wobei die erste Schmelztemperatur niedriger ist als die zweite Schmelztemperatur, und dass während des Erwärmungsschritts der obere Abschnitt (42) der Heizvorrichtung (40) auf einer ersten Heiztemperatur gehalten wird und der untere Abschnitt (44) der Heizvorrichtung (40) auf einer zweiten Heiztemperatur gehalten wird, wobei die zweite Heiztemperatur strikt höher ist als die erste Heiztemperatur,
**dadurch gekennzeichnet, dass** die erste Heiztemperatur größer als oder gleich wie die erste Schmelztemperatur ist und die zweite Heiztemperatur größer als oder gleich wie die zweite Schmelztemperatur ist.

2. Herstellungsverfahren nach Anspruch 1, wobei die erste Heiztemperatur strikt unter der zweiten Schmelztemperatur ist.

3. Herstellungsverfahren nach Anspruch 1 oder 2, wobei das zweite heißschmelzende Polymer Polyethylenterephthalat (PET) umfasst.

4. Herstellungsverfahren nach einem der Ansprüche 1 bis 3, wobei das erste heißschmelzende Polymer ein Polyethylen-Copolymer (coPET) ist.

5. Herstellungsverfahren nach einem der Ansprüche 1 bis 4, wobei die Verbindungsfasern (22) Bikomponentenfasern aus Polyethylen-Copolymer (coPET) und Polyethylenterephthalat (PET) sind.

6. Herstellungsverfahren nach einem der Ansprüche 1 bis 5, wobei die Matte (10, 60, 70) zwischen 60 und 80 Masse-% Strukturfasern (20) und zwischen 20 und 40 Masse-% Verbindungsfasern (22) umfasst.

7. Herstellungsverfahren nach einem der Ansprüche 1 bis 6, wobei die Matte (60, 70) eine erste Seite (30) und eine zweite Seite (32) aufweist, und wobei die Matte (60, 70) vor dem Erhitzen einen Gradienten an Verbindungsfasern (22) zwischen der ersten Seite (30) und der zweiten Seite (32) der Matte (60, 70) aufweist, wobei der Anteil der Verbindungsfasern (22) in der Nähe der zweiten Seite (32) höher ist als in der Nähe der ersten Seite (30), und dass während des Erwärmens die erste Seite (30) mit dem oberen Abschnitt (42) der Heizvorrichtung (40) in Kontakt ist und die zweite Seite (32) mit dem unteren Abschnitt (44) der Heizvorrichtung (40) in Kontakt ist.

8. Herstellungsverfahren nach Anspruch 7, wobei der Gradient durch Aufspritzen von Pulver, das aus einem ersten Polymer besteht, auf die zweite Seite (32) der Matte (60) gebildet wird.

9. Herstellungsverfahren nach einem der Ansprüche 1 bis 8, wobei die Matte (70) eine erste Schicht (72), die aus einer Mischung aus Strukturfasern (20) und Verbindungsfasern (22) besteht, und eine zweite Schicht (74), die aus Verbindungsfasern (22) besteht, umfasst.

10. Herstellungsverfahren nach einem der Ansprüche 1 bis 9, wobei die zweite Heiztemperatur über 240 °C ist und die erste Heiztemperatur zwischen 180 °C und 220 °C ist.

11. Teil (1) eines Fahrzeugs, das durch das Herstellungsverfahren nach einem der Ansprüche 1 bis 10 erlangt werden kann.

12. Teil (1) nach Anspruch 11, **dadurch gekennzeichnet, dass** das Teil (1) eine Schallabsorption zwischen 0,7 alpha Sabine und 0,98 alpha Sabine aufweist.

13. Teil (1) nach Anspruch 11 oder 12, wobei das Teil (1) eine Außenseite (4) und eine Innenseite (6) umfasst, wobei der Luftdurchgangswiderstand des Teils (1) in der Nähe der Außenseite (4) strikt größer ist als der Luftdurchgangswiderstand des Teils in der Nähe der Innenseite (6).

## Claims

1. A method of manufacturing a motor vehicle part (1), the method comprising the following steps:
- providing a web (10, 60, 70), the web (10, 60, 70) comprising a mixture of binding fibres (22) and structural fibres (20),
- providing a heating device (40), the heating device (40) comprising an upper part (42) and a lower part (44), movable relative to each other between a pressure position and a spread position,
- heating the web (10, 60, 70) in the heating device (40) by bringing the web (10, 60, 70) in contact with the lower part (44) of the heating device (40) and with the upper part (42) of the heating device (44),
- shaping the web (10, 60, 70) in a shaping mould, so as to form the part (1),
the bonding fibres (22) being made of a first hot-melt polymer, the structural fibres (20) being made of a second hot-melt polymer, the first hot-melt polymer having a first melting temperature, the second hot-melt polymer having a second melting temperature, the first melting temperature being lower than the second melting temperature and in that, during the heating step, the upper part (42) of the heating device (40) is maintained at a first heating temperature and the lower part (44) of the heating device (40) is maintained at a second heating temperature, the second heating temperature being strictly higher than the first heating temperature, **characterised in that** the first heating temperature is greater than or equal to the first melting temperature and the second heating temperature is greater than or equal to the second melting temperature.

2. The manufacturing method according to claim 1, wherein the first heating temperature is strictly lower than the second melting temperature.

3. The manufacturing method according to claim 1 or 2, wherein the second hot-melt polymer comprises polyethylene terephthalate (PET).

4. The manufacturing method according to any one of claims 1 to 3, wherein the first hot-melt polymer comprises a polyethylene copolymer (coPET)

5. The manufacturing method according to any one of claims 1 to 4, wherein the bonding fibres (22) are bicomponent fibres of polyethylene copolymer (coPET) and polyethylene terephthalate (PET).

6. The manufacturing method according to any one of claims 1 to 5, wherein the web (10, 60, 70) comprises between 60% and 80% by weight of structural fibres (20) and between 20% and 40% by weight of binding fibres (22).

7. The manufacturing method according to any one of claims 1 to 6, wherein the web (60, 70) has a first side (30) and a second side (32), and prior to heating the web (60, 70) has a gradient of bonding fibres (22) between the first side (30) and the second side (32) of the web (60, 70), wherein the proportion of bonding fibres (22) being higher in the vicinity of the second side (32) than in the vicinity of the first side (30), and in that, during heating, the first side (30) is in contact with the upper part (42) of the heating device (40) and the second side (32) is in contact with the lower part (44) of the heating device (40).

8. The manufacturing method according to claim 7, wherein the gradient is formed by spraying powder consisting of the first polymer onto the second side (32) of the web (60).

9. The manufacturing method according to any one of claims 1 to 8, wherein the web (70) comprises a first layer (72) consisting of a mixture of structural fibres (20) and binding fibres (22) and a second layer (74) consisting of binding fibres (22).

10. The manufacturing method according to any one of claims 1 to 9 wherein the second heating temperature is above 240 °C and the first heating temperature is between 180 °C and 220 °C.

11. A vehicle part (1) obtainable by the manufacturing method according to any one of claims 1 to 10.

12. The part (1) according to claim 11, **characterised in that** the part (1) has a sound absorption between 0.7 alpha Sabine and 0.98 alpha Sabine.

13. The part (1) according to claim 11 or 12, wherein the part (1) comprises an outer face (4) and an inner face (6), the resistance to air passage of the part (1) in the vicinity of the outer face (4) being strictly greater than the resistance to air passage of the part in the vicinity of the inner face (6).
